# EUROPÄISCHE PATENTSCHRIFT

(11) **EP 2 046 689 B1**
(45) Veröffentlichungstag und Bekanntmachung des Hinweises auf die Patenterteilung: **19.10.2011**
(21) Anmeldenummer: 07786343.9
(22) Anmeldetag: 26.07.2007
(51) Int. Cl.: C02F 3/30

(54) **ANLAGE ZUR VORREINIGUNG VON SCHMUTZWÄSSERN MIT INTEGRIERTER WEITERBEHANDLUNG DER FESTSTOFFE**
PLANT FOR THE PREPURIFICATION OF CONTAMINATED WATER WITH INTEGRATED FURTHER TREATMENT OF THE SOLIDS
DISPOSITIF DE PURIFICATION PRÉLIMINAIRE DES EAUX USÉES AVEC TRAITEMENT ULTÉRIEUR INTÉGRÉ DES SOLIDES

(30) Priorität: 29.07.2006 EP 06015852
(43) Veröffentlichungstag der Anmeldung: 15.04.2009
(73) Patentinhaber: Böttcher, Joachim, 67822 Hengstbacherhof (DE)
(72) Erfinder: Böttcher, Joachim, 67822 Hengstbacherhof (DE)
(74) Vertreter: Patentanwälte Bitterich, Dr. Keller, Schwertfeger
(86) Internationale Anmeldenummer: PCT/EP2007/006621
(87) Internationale Veröffentlichungsnummer: WO 2008/014918

(56) Entgegenhaltungen:
- DE-A1- 3 330 696
- DE-A1- 19 609 605
- DE-A1- 19 737 691
- GB-A- 190 311 073
- US-A- 3 029 950
- US-A- 4 746 433

## Beschreibung

### Technisches Gebiet:

Die Erfindung betrifft eine erweitere Anlage zur Reinigung von Abwässern ohne Entstehung von Klärschlamm. Die Erfindung liegt auf dem Gebiet der Abwasserreinigung.

### Stand der Technik:

Der nächstkommende Stand der Technik ist im deutschen Patent 197 37 691 offenbart, in dem eine Anlage zur Reinigung von Abwässern ohne Entstehung von Klärschlamm beschrieben ist, bei der eine Abtrennung von Grob- bzw. Feststoffen unter Verwendung eines Grobstoffrottefilters stattfindet, wobei diese Anlage aus mindestens einem Schacht, der eine Abwasserzulaufvorrichtung, einen eine Filterschicht aufweisenden Rottebehälter sowie eine Ablaufvorrichtung für das gereinigte Wasser beinhaltet, besteht.

Die US-A-3,123,555 beschreibt ein Verfahren zur Reinigung von Abwässern mit Hilfe einer aeroben Fermentation.

In der GB-A-386 242 wird ein Verfahren zur Reinigung von Abwässern beschrieben, bei dem die Abwässer in einen luftdichten Behälter geführt werden. Weiterhin wird eine entsprechende Vorrichtung offenbart, die zur Behandlung von Abwässern ein luftdichtes System mit einem ein Filterbett enthaltenden Tank umfasst.

### Aufgabe der Erfindung:

Es ist Aufgabe der Erfindung, eine Anlage zur Reinigung von Abwässern bereitzustellen, bei der die Bildung von Klärschlamm vermieden wird und ein Aufschluss der im Klärschlamm enthaltenen Feststoffe unter Freisetzung von Nährstoffen erfolgt.

Unter Klärschlamm wird erfindungsgemäß sämtliche aus Abwässern gewerblicher oder häuslicher Herkunft stammende Schlammmasse verstanden, in der für Natur und Menschen schädliche Schadstoffe enthalten sein können.

Bei Klärschlamm unterscheidet man zwischen Rohschlamm und behandeltem Klärschlamm. Rohschlamm fällt bei Kläranlagen insbesondere als Primärschlamm in der mechanischen Reinigungsstufe und/oder als Überschussschlamm in der biologischen Stufe (z. B. Belebtschlammverfahren) an. Überschussschlamm besteht überwiegend aus Mikroorganismen, wie etwa Protisten und Bakterien. Durch aerobe und anaerobe Stabilisierung des Rohschlamms (Z. B. in Faultürmen) erhält man den weniger geruchsintensiven behandelten Klärschlamm.

- Es folgt der Text der ursprünglichen Beschreibung -

Klärschlamm ist reich an Pflanzennährstoffen, insbesondere Stickstoff, Phosphor und je nach Entwässerungsverfahren auch Kalzium. Allerdings enthält Klärschlamm als Schadstoffsenke auch eine Vielzahl unterschiedlicher Schadstoffe mit zum Teil noch unbekannten Auswirkungen auf die Natur und den Menschen. Diese Schadstoffe lassen sich in anorganische Schadstoffe und organische Schad- und Fremdstoffe unterscheiden. Zu den anorganischen Schadstoffen zählen beispielsweise toxische Schwermetalle. Zu den organischen Schadstoffen zählen beispielsweise Dioxine, Furane, Xenobiotika oder polyzyklische aromatische Kohlenwasserstoffe (PAK).

Unter Feststoffe versteht man Schwebstoffe, die sich in der Kläranlage aus dem Wasser absetzen und zu Boden sedimentieren. Im Allgemeinen handelt es sich um abbaubare organische Substanzen.

Von den Erfindern wurde nun überraschenderweise festgestellt, dass anstelle der aeroben Rotte zur Verbesserung der Endprodukte ein anaerober Fermentationsprozess auftreten kann, wobei das fermentierte Material, nämlich die Feststoffe aus dem Schmutzwasser, sich durch eine besonders homogene Struktur auszeichnet und für die landwirtschaftliche oder gartenbauliche Verwertung optimal geeignet ist. Die in den Feststoffen enthaltenen Nährstoffe werden beim anaeroben Fermentationsprozess aufgeschlossen und sind dadurch besser von den Pflanzen aufnehmbar.

Zudem weist das fermentierte Material eine bodenverbessernde und humusbildende Wirkung auf. Hinzu kommt eine effektive Eliminierung der pathogenen Mikroorganismen, weil der pH-Wert während des Fermentationsprozesses sehr stark, nämlich unter pH 4, abgesenkt wird.

Zur Vermeidung einer unnötigen Schadstoffbelastung von Natur und Mensch werden vorzugsweise Abwässer aus dezentralen oder semizentralen Anlagen eingesetzt, d.h. aus Siedlungen mit einer überschaubaren Siedlungsdichte ohne Vermischung mit toxisch bedenklichen Gewerbeabwässern.

### Beste Wege zur Ausführung der Erfindung:

Das Schmutzwasser wird beispielsweise per Freigefälle oder per Pumpe in Behälter, Schächte oder Becken eingebracht, wo es über die Behälter- oder Schachtsohle oder über Öffnungen in den Wänden permanent entwässert wird. Eine organische Filterschüttung oder ein siebähnlicher Filter aus Kunststoff oder Metall sorgt für die Entwässerung am Boden. Das Filtrat bzw. gefilterte Abwasser kann anschließend in einer bevorzugten Ausführungsform noch in einen Sedimentationsbereich geleitet werden, wo die im Behälter oder Schacht nicht herausgefilterten Feststoffe durch Sedimentation zurückgehalten werden. Dadurch wird eine noch effektivere Vorreinigungsleistung erreicht, die insbesondere in Verbindung mit einem nachfolgenden Bodenfilter (zur biologischen Reinigung) sinnvoll ist, um beispielsweise Verstopfungen des Bodenfilters vorzubeugen.

Während des Betriebs können zur Verbesserung der Entwässerungsleistung und Optimierung des Endproduktes organische Kohlenstoffträger (Stroh, Häcksel, Holzspäne, Röhricht usw.) hinzugefügt werden. Zudem können während des Betriebs spezielle Mikroorganismen und/oder Bodelebewesen zugeführt werden, die während des Betriebs, aber vor allem in der anschließenden Fermentierungsphase zu besseren Ergebnissen führen. Bevorzugt handelt es sich bei den Mikroorganismen um fermentierende Milchsäurebakterien oder Hefepilze, oder eine Mischpopulation davon.

Bei den in der Erfindung verwendbaren Bodelebewesen handelt es sich beispielsweise um Würmer (Nematoden) oder Spinnmilben. Diese Bodenlebewesen können eine Auflockerung, Umbau und/oder Homogenisation des Materials bewirken, welche die sich anschließende oder gleichzeitig ablaufende anaerobe Fermentation durch die Mikroorganismen begünstigen.

Wenn ein Schacht, Behälter oder Becken mit Feststoffen aufgefüllt ist, wird der Abwasserzulauf auf einen weiteren Schacht oder Behälter umgestellt, welcher nun wie der erste betrieben wird. Im ruhenden Schacht oder Behälter oder Becken wird nun die Fermentierungsphase eingeleitet. Zur Optimierung der Fermentation können den Feststoffen spezielle Mikroorganismen und/oder Bodenlebewesen zugeführt werden und/oder ein Luftabschluss durch Abdeckung und/oder Verschluss der Zu- und Abläufe vorgenommen werden. Nach abgeschlossener Fermentation können die Feststoffe aus dem Behälter oder Schacht oder Becken entnommen werden und einer Verwertung zugeführt werden.

Der Behälter oder Schacht oder Becken kann nach der Entleerung wieder in Betrieb genommen werden, d. h. das Schmutzwasser bzw. das Abwasser kann wieder zugeführt werden und der bisher in Betrieb befindliche Behälter oder Schacht oder Becken kann in die Ruhephase übergehen.

### Beschreibung der Zeichnungen:

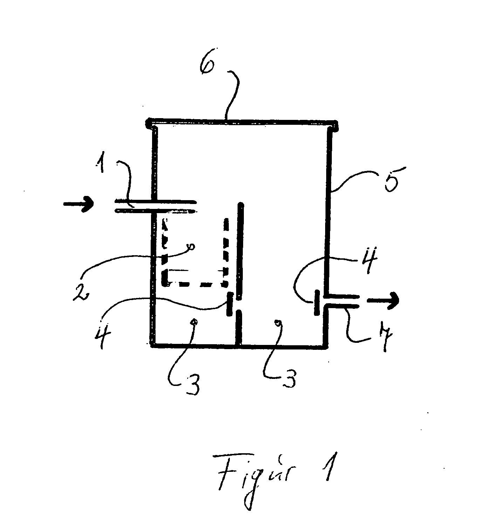

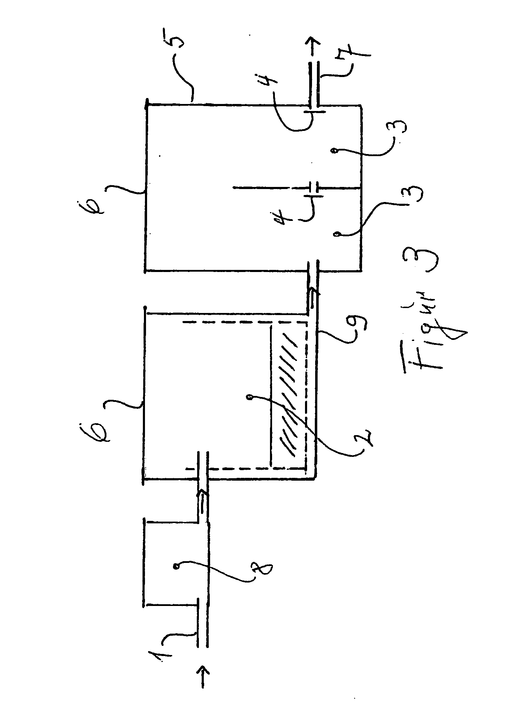

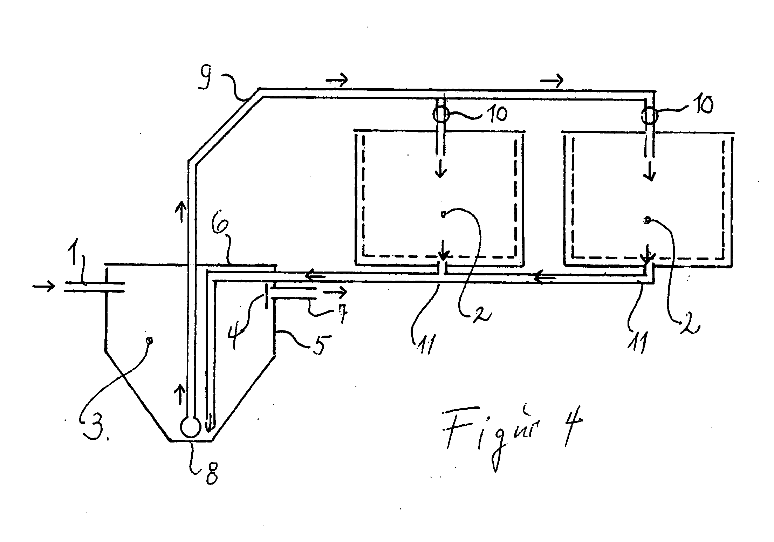

Der Gegenstand vorliegender Erfindung wird nun anhand der beiliegenden Fig. 1 bis 4 weiterhin erläutert.

Ein Beispiel dieser Anlage ist in der beiliegenden Fig. 1 dargestellt, wobei die Einzelelemente durch Ziffern gekennzeichnet sind und folgende Bedeutung haben: Zulauf (1).
Rotte- und/oder Fermentationsbereich (2),
Sedimentationsbereich (3),
Vorrichtung zur Rückhaltung von Schwimmschlamm (4),
Schacht, Behälter oder Becken (5),
Abdeckung mit Öffnung (6),
Ablauf (7).

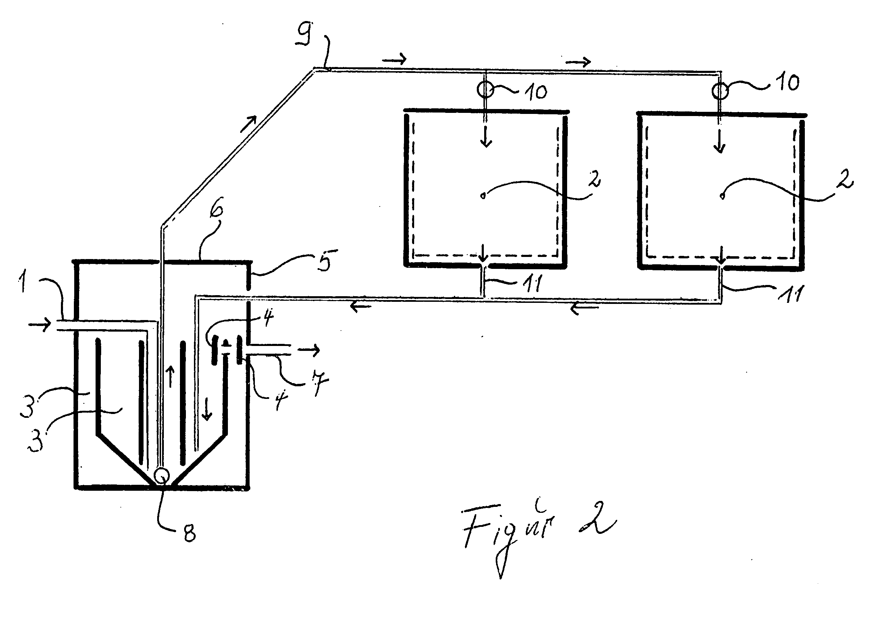

Es folgt die Bezugsziffernliste der weiteren Ausführungsbeispiele gemäß den Fig. 2 bis 4:
Fig. 2:
   Zulauf (1),
   Rotte- und/oder Fermentationsbereich (2),
   Sedimentationsbereich (3),
   Vorrichtung zur Rückhaltung von Schwimmschlamm (4),
   Schacht, Behälter oder Becken (5),
   Abdeckung mit Öffnung (6),
   Ablauf (7),
   Pumpe und/oder Hebeanlage (8),
   Leitung zur Befüllung der Rotte- oder Fermentationsbehälter (9),
   Vorrichtung zur Umstellung der Behälter (10),
   Ablaufvorrichtung für Sickerwasser (11).
Fig. 3:
   Zulauf (1),
   Rotte- und/oder Fermentationsbereich (2),
   Sedimentationsbereich (3),
   Vorrichtung zur Rückhaltung von Schwimmschlamm (4),
   Schacht, Behälter oder Becken (5),
   Abdeckung mit Öffnung (6),
   Ablauf (7),
   Vorrichtung zur Umstellung der Behälter (8),
   Ablaufvorrichtung für Sickerwasser (9).
Fig. 4:
   Zulauf (1),
   Rotte- und/oder Fermentationsbereich (2),
   Sedimentationsbereich (3),
   Vorrichtung zur Rückhaltung von Schwimmschlamm (4),
   Schacht, Behälter oder Becken (5),
   Abdeckung mit Öffnung (6),
   Ablauf (7),
   Pumpe und/oder Hebeanlage (8),
   Leitung zur Befüllung der Rotte- oder Fermentationsbehälter (9),
   Vorrichtung zur Umstellung der Behälter (10),
   Ablaufvorrichtung für Sickerwasser (11).

In kombinatorischer Verzahnung wird weiterhin erfindungsgemäß vorgeschlagen, dass eine Sedimentationsanlage, z. B. ein Absetzbecken und/oder ein Absetzteich und/oder ein Dortmundbrunnen und/oder eine Mehrkammergrube, vorgeschaltet werden.

Die dort sedimentierten Feststoffe werden mit einer Pumpe oder anderen Fördereinrichtungen aus der Sedimentationsanlage abgezogen und direkt in die Behälter oder Schächte eingeleitet. Die Behälter oder Schächte verfügen in jedem Fall über Entwässerungs- und Filtervorrichtungen, wie oben beschrieben, damit die Feststoffe zurückgehalten werden und die flüssige Phase abfließen kann. Die flüssige Phase kann in die Sedimentationsanlage zurückgeführt werden. Von der Sedimentationsanlage aus kann das mechanisch und/oder teilbiologisch vorbehandelte Abwasser in weitere biologische Behandlungsstufen gebracht werden.

Durch den gezielten Abzug der Feststoffe aus der Sedimentation werden nur geringe Anteile des gesamten zufließenden Abwassers tatsächlich über die Behälter der Schächte des Verfahrens geleitet. Dadurch werden die Filterprozesse hydraulisch nicht zu stark beansprucht und die Entwässerungsleistung verbessert.

Auch bei dieser Betriebs- bzw. Verfahrensweise mit der vorgeschalteten Sedimentation können nach der Befüllung eines Schachtes oder Behälters mit Feststoffen entweder Rotteprozesse oder Fermentationsprozesse eingeleitet werden.

## Patentansprüche

1. Verfahren zur Reinigung von Abwässern aus dezentralen und semizentralen Anlagen indem das Schmutzwasser über eine Abwasserzulaufvorrichtung in mindestens einen Behälter, einen Schacht oder ein Becken eingebracht wird, wo es über die Behälter- oder Schachtsohle oder über Öffnungen in den Wänden und über eine organische Filterschüttung oder einen siebähnlichen Filter für eine Entwässerung am Boden während des Rotteprozesses permanent entwässert wird und das gereinigte Abwasser über eine Ablaufvorrichtung abfließt, wobei der Abwasserzulauf unterbrochen wird, wenn der Behälter, der Schacht oder das Becken mit Feststoffen aufgefüllt ist, um anschließend eine Fermentationsphase unter Anwesenheit von fermentierenden Milchsäurebakterien durchzuführen, wodurch die in den Feststoffen enthaltenen Nährstoffe aufgeschlossen werden, wobei das fermentierte Material einer Verwertung zur Bodenverbesserung oder Humusbildung zugeführt wird.

2. Verfahren nach Anspruch 1, **dadurch gekennzeichnet, dass** während des Betriebes organische Kohlenstoffträger wie Stroh, Häcksel, Holzspäne oder Röhricht hinzugefügt werden.

3. Verfahren nach Anspruch 1 oder 2, **dadurch gekennzeichnet, dass** während des Betriebes Mikroorganismen und/oder Bodenlebewesen zugeführt werden.

4. Verfahren nach einem der Ansprüche 1 bis 3, **dadurch gekennzeichnet, dass** die Feststoffe nach der Fermentation aus dem Behälter oder Schacht oder Becken entnommen und einer Verwertung zugeführt werden.

5. Verfahren nach einem der Ansprüche 1 bis 4, **dadurch gekennzeichnet, dass** vor der Rotte- oder Fermentationsphase eine Sedimentationsphase zur Vorentwässerung durchgeführt wird.

6. Anlage zur Reinigung von Abwässern aus dezentralen und semizentralen Anlagen, die aus mindestens einem Schacht, Behälter oder Becken (5), einer Abwasserzulaufvorrichtung (1) sowie einer Ablaufvorrichtung (7) für das gereinigte Wasser besteht, wobei der Behälter, der Schacht oder das Becken über eine Behälter- oder Schachtsohle oder Öffnungen in den Wänden entwässerbar ist und über eine organische Filterschüttung oder einen siebähnlichen Filter für eine Entwässerung am Boden verfügt und wobei der Schacht, Behälter oder das Becken (5) zur Durchführun eines aeroben Rotteprozesses geeignet ist, **dadurch gekennzeichnet, dass** zur Durchführung eines anaeroben Fermentationsprozesses in dem Schacht. Behälter oder Becken (5) die Abwasserzufuhr in den Schacht, Behälter oder das Becken (5) unterbrechbar ist, wobei die anaerobe Fermentation unter Anwesenheit von fermentierenden Milchsäurebakterien erfolgt.

7. Anlage nach Anspruch 6, **dadurch gekennzeichnet, dass** eine Sedimentationsanlage (3), vorgesehen ist.

8. Anlage nach Anspruch 7, **dadurch gekennzeichnet, dass** die Sedimentationsanlage (3) aus einem Absetzbecken und/oder einem Absetzteich und/oder einem Dortmundbrunnen und/oder Mehrkammergruben besteht.

9. Anlage nach einem der Ansprüche 6 bis 8, **dadurch gekennzeichnet, dass** die Anlage eine Zugabevorrichtung für organische Kohlenstoffträger aufweist.

## Claims

1. A method of purifying waste water from decentralised and semi-centralised installations, in that the foul water is introduced via a waste-water inflow device into at least one container, a shaft or a tank, in which it is permanently drained via the container or shaft bottom or via openings in the walls and via an organic filtration bed or a screen-like filter for draining at the bottom during the decomposition process, and the purified waste water flows out via an outflow device, wherein the waste-water inflow is interrupted when the container, the shaft or the tank is filled up with solid matter, so as subsequently to carry out a fermentation phase in the presence of fermenting lactic acid bacteria, whereby the nutrients contained in the solid matter are decomposed, wherein the fermented material is supplied to be recycled for soil conditioning or humus formation.

2. A method according to Claim 1, **characterised in that**, during operation, organic carbon carriers, such as straw, chopped straw, wood chippings or reeds, are added.

3. A method according to Claim 1 or 2, **characterised in that**, during operation, micro-organisms and/or soil organisms are supplied.

4. A method according to any one of Claims 1 to 3, **characterised in that**, after the fermentation, the solid matter is removed from the container or shaft or tank and is supplied for recycling.

5. A method according to any one of Claims 1 to 4, **characterised in that**, before the decomposition or fermentation phase, a sedimentation for preliminary draining is carried out.

6. An installation for purifying waste water from decentralised and semi-centralised installations, which comprises at least one shaft, container or tank (5), a waste-water inflow device (1) and an outflow device (7) for the purified water, wherein the container, the shaft or the tank can be drained via a container or shaft bottom or openings in the walls and is provided with an organic filtration bed or a screen-like filter for draining at the bottom, and wherein the shaft, container or the tank (5) is suitable for carrying out an aerobic decomposition process, **characterised in that** to carry out an anaerobic fermentation process in the shaft, container or tank (5) the waste-water supply into the shaft, container or the tank (5) can be interrupted, wherein the anaerobic fermentation takes place in the presence of fermenting lactic acid bacteria.

7. An installation according to Claim 6, **characterised in that** a sedimentation installation (3) is provided.

8. An installation according to Claim 7, **characterised in that** the sedimentation installation (3) comprises a settling tank and/or a settling pond and/or a Dortmund tank and/or multichamber pits.

9. An installation according to any one of Claims 6 to 8, **characterised in that** the installation has an input device for organic carbon carriers.

## Revendications

1. Procédé d'épuration d'eaux usées provenant de stations décentralisées et semi-centralisées, dans lequel les eaux souillées sont déversées, en empruntant un dispositif d'afflux d'eaux usées, dans au moins un réceptacle, un puits ou un bassin dans lequel elles sont déshydratées en permanence par l'intermédiaire du fond du réceptacle ou du puits, ou par l'intermédiaire d'orifices pratiqués dans les parois et d'un garnissage organique en vrac à action filtrante, voire d'un filtre du type tamis, en vue d'un drainage en partie basse au cours du processus de décomposition, puis les eaux usées épurées s'écoulent en empruntant un dispositif d'évacuation, sachant que l'afflux d'eaux usées est interrompu lorsque ledit réceptacle, ledit puits ou ledit bassin est empli de substances solides en vue de l'exécution, dans la continuité, d'une phase de fermentation en présence de bactéries d'acide lactique en fermentation, absorbant ainsi les substances nutritives renfermées par lesdites substances solides, la matière fermentée étant dédiée à une exploitation visant l'amendement des sols ou la formation d'humus.

2. Procédé selon la revendication 1, **caractérisé par le fait que** des substances organiques d'apport de carbone, telles que de la paille, du fourrage haché, des copeaux de bois ou des roseaux, sont ajoutées en cours de fonctionnement.

3. Procédé selon la revendication 1 ou 2, **caractérisé par le fait que** des micro-organismes et/ou des organismes édaphiques sont ajoutés en cours de fonctionnement.

4. Procédé selon l'une des revendications 1 à 3, **caractérisé par le fait que** les substances solides sont prélevées du réceptacle, du puits ou du bassin à l'issue de la fermentation, et sont dédiées à une exploitation.

5. Procédé selon l'une des revendications 1 à 4, **caractérisé par le fait qu'**une phase de sédimentation est exécutée préalablement à la phase de décomposition ou de fermentation, en vue du drainage préalable.

6. Installation d'épuration d'eaux usées provenant de stations décentralisées et semi-centralisées, composée d'au moins un puits, réceptacle ou bassin (5), d'un dispositif (1) d'afflux d'eaux usées, ainsi que d'un dispositif (7) d'évacuation des eaux épurées, ledit réceptacle, puits ou bassin pouvant être asséché par l'intermédiaire d'un fond de réceptacle ou de puits, voire d'orifices pratiqués dans les parois, et étant muni d'un garnissage organique en vrac à action filtrante, voire d'un filtre du type tamis, en vue d'un drainage en partie basse, sachant que ledit puits, réceptacle ou bassin (5) se prête à l'exécution d'un processus de décomposition aérobie, **caractérisée par le fait que** l'afflux d'eaux usées dans le puits, le réceptacle ou le bassin (5) peut être interrompu, en vue de l'exécution d'un processus de fermentation anaérobie dans ledit puits, ledit réceptacle ou ledit bassin (5), la fermentation anaérobie s'opérant en présence de bactéries d'acide lactique en fermentation.

7. Installation selon la revendication 6, **caractérisée par** la présence d'une installation de sédimentation (3).

8. Installation selon la revendication 7, **caractérisée par le fait que** l'installation de sédimentation (3) est constituée d'un bassin de décantation et/ou d'un étang de décantation et/ou d'un décanteur de type Dortmund et/ou de fosses à compartiments multiples.

9. Installation selon l'une des revendications 6 à 8, **caractérisée par le fait que** ladite installation comporte un dispositif d'adjonction de substances organiques d'apport de carbone.
